# EUROPÄISCHE PATENTSCHRIFT

(11) **EP 1 173 866 B1**
(45) Veröffentlichungstag und Bekanntmachung des Hinweises auf die Patenterteilung: **04.02.2004**
(21) Anmeldenummer: 00938487.6
(22) Anmeldetag: 17.04.2000
(51) Int. Cl.: H01H 71/10, H01H 71/02

(54) **VERBINDUNGSVORRICHTUNG**
LINKING DEVICE
DISPOSITIF D'ASSEMBLAGE

(30) Priorität: 29.04.1999 DE 19919541
(43) Veröffentlichungstag der Anmeldung: 23.01.2002
(73) Patentinhaber: SIEMENS AKTIENGESELLSCHAFT, 80333 München (DE)
(72) Erfinder: SCHMID, Josef, D-93183 Kallmünz (DE); FRANZ, Bernhard, D-93055 Regensburg (DE); LEITL, Wolfgang, D-93173 Wenzenbach (DE)
(86) Internationale Anmeldenummer: PCT/DE2000/001200
(87) Internationale Veröffentlichungsnummer: WO 2000/067276

(56) Entgegenhaltungen:
- DE-A- 4 420 766
- DE-U- 8 322 594
- FR-A- 1 590 867
- FR-A- 2 576 140

## Beschreibung

Die Erfindung bezieht sich auf eine Verbindungsvorrichtung mit einem ersten Bauelement und einem zweiten Bauelement sowie mit einem flachbandartigen Verbindungselement gemäß dem Oberbegriff des Anspruchs 1. Unter Bauelemente werden hierbei insbesondere Gehäuseteile oder -schalen von Reiheneinbau- oder Niederspannungsschaltgeräten, z.B. von Leitungsschutzschaltern, verstanden.

Leitungsschutzschalter und andere Reiheneinbaugeräte sowie deren Gehäuseteile oder -hälften werden üblicherweise mittels Schrauben und Muttern, Klammern oder Nieten ein- und mehrpolig verbunden, wobei je Pol eine Gehäuseschale und eine Deckelschale miteinander zu verbinden sind. Derartige Verbindungen sollen einerseits kostengünstig und einfach herzustellen sowie leicht zu montieren sein. Andererseits sollen von den Verbindungen infolge von Lichtbogeneinflüssen auftretende Druckspannungen aufgenommen und Toleranzen kompensiert werden, während Quellungen und Nachschwingungen der Gehäuseschalen unter Klimabedingungen zuzulassen sind. Auch soll eine bestimmte Vorspannkraft auf die Gehäuseschalen ausgeübt werden, um sowohl einen Verdrehschutz der zu verbindenden Teile sicherzustellen als auch einen Schutz gegen ungewünschtes Lösen der Verbindung zu gewährleisten.

Während eine Verschraubung der Bauteile oder Gehäuseschalen miteinander einerseits kostenintensiv ist und andererseits die Schraubverbindung gegen unbeabsichtigtes Lösen beispielsweise mittels Lack zu sichern ist, bietet eine Nietverbindung in deren Längsrichtung nur einen geringen Toleranzausgleich.

Dies gilt insbesondere dann, wenn die auszugleichenden Toleranzen sich summieren. Zudem knicken Nietverbindungen beim Nietvorgang mit relativ langen Nieten leicht aus. Außerdem werden für den Verdrehschutz der einzelnen Pole bisher häufig zusätzliche Zentrierstücke eingesetzt, was jedoch zusätzliche Fertigungs- und Herstellungskosten verursacht.

Bei einer ebenfalls häufig eingesetzten Klammer-Verbindung müssen in ebenfalls kostenintensiver Art und Weise mindestens zwei Klammern verwendet werden. Dabei sind die Pole einerseits zueinander nur mit geringer Spannkraft verspannt, während andererseits die Klammern mit der Folge einer Manipulationsgefahr leicht lösbar sind. Eine ebenfalls bisher verwendete Klebeverbindung erlaubt keine zerstörungsfreie Demontage der einzelnen Bauelemente und gewährleistet zudem keine ausreichende Verspannung der Bauteile miteinander.

Aus dem deutschen Gebrauchsmuster DE 83 22 594 U1 ist ein aus einem Flachbandmaterial gefertigtes Verbindungselement beispielsweise auch für Leitungsschutzschalter mit einem länglichen Schaft bekannt, dessen beiden Schaftenden durch angeformte Nasen T-förmig ausgestaltet sind. Zum Einführen des bekannten Verbindungselements in die miteinander fluchtenden Durchgangsöffnungen oder Bohrungen der zu verbindenden Bauteile ist eines der Schaftenden derart geschlitzt, dass die T-förmig ausgestellten Halte- oder Fixiernasen in Richtung auf die Schaftlängsachse verschränkt werden können. Zwar ist dadurch eine Anpassung dieses Schaftendes an die Schaftbreite erreicht. Allerdings führt diese Ausgestaltung zwangsläufig zu einer Querschnittsschwächung des Schaftes und damit des Verbindungselements mit der Folge, dass der Querschnitt auf der gesamten Schaftlänge durch äquidistante Bohrungen gezielt geschwächt werden muss. Dadurch kann zwar eine gleichmäßige Materialbelastung erreicht und eine Sollbruchstelle vermieden werden. Allerdings führt diese Querschnittsschwächung zu einer erheblichen Reduzierung des belastbaren Schaftquerschnitts und damit zu einer Reduzierung der Verspannkraft, die durch ein Verdrillen des Schaftes mit der Folge einer Längenreduzierung des Verbindungselements erzielt werden soll. Zudem muss in aufwendiger Art und Weise beim Verdrillen der gesamte, durch ein Langloch verlängerte Schlitz am entsprechenden Schaftende mittels eines Werkzeugs überdeckt und das gegenüberliegende Schaftende gehalten werden, um einerseits dieses Schaftende gegen ein Mitdrehen zu sichern, und um andererseits eine möglichst gleichmäßige Zug- und damit Verspannkraft an den Schaftenden zu erzielen. Ferner ist aufgrund des komplizierten Ein- und Ausbiegemechanismus mit dem geschlitzten Schaftende eine mehrfache Verdrillung erforderlich, um die für eine Verspannung der Bauteile ausreichende Längenverkürzung des Verbindungselements zu erzielen.

Der Erfindung liegt daher die Aufgabe zugrunde, eine Verbindungsvorrichtung der eingangs genannten Art anzugeben, bei dem die genannten Nachteile vermieden sind.

Diese Aufgabe wird erfindungsgemäß gelöst durch die Merkmale des Anspruchs 1. Dazu ist eine das Halteende des Verbindungselements aufnehmende und mit den Durchgangsöffnungen fluchtende erste Montagevertiefung als Zentrierkegel ausgebildet, wobei das Halteende selbst unter Bildung einer mit dem Zentrierkegel korrespondierenden Anzugsfläche konisch ausgebildet ist.

Dadurch wird beim Verdrehen des Verbindungselements zum Verspannen der Bauelemente einerseits eine Zentrierung und andererseits ein besonders geringer Verdreh- oder Verdrillweg bei gleichzeitig entlang des Schaftes ungeschwächtem Materialquerschnitt erzielt. Außerdem wird zusätzlich zur zuverlässigen Selbstzentrierung des vorzugsweise aus einem Flachbandmaterial durch Stanzung gefertigten Verbindungselements innerhalb der miteinander fluchtenden Durchgangsbohrungen der Bauelemente beim Verdrehen des Verbindungselements eine über dessen Querschnitt gleichmäßige Zugkraft auf das gegenüberliegende Schaftende ausgeübt. Dabei liegt dieses auch als Einführende dienende Schaftende im Montagezustand und vor dem Verdrehen des Verbindungselements formschlüssig in einer entsprechenden (zweiten) Montagevertiefung ein.

Zur Herstellung des Formschlusses des dem konisch ausgebildeten Halteende gegenüberliegenden und auch als Einführende dienenden Schaftende kann dieses T-förmig mit zwei Fixierlaschen ausgestaltet sein. Bei dieser Ausführungsform sind in den Durchgangsöffnungen der Bauelemente diametral gegenüberliegende Führungsschlitze vorgesehen, in denen das Einführende und damit die beiden Fixierlaschen beim Hindurchschieben des Verbindungselements durch die Durchgangsöffnungen geführt wird bzw. werden.

In besonders vorteilhafter Ausgestaltung wird die Verbindung bei dieser Variante nach Art eines Bajonett-Verschlusses realisiert. Dazu sind beim Verdrehen des Verbindungselements vorzugsweise beide Fixierlaschen am Einführende entlang jeweils einer rampenartigen Innenkontur geführt, die in der das Einführende aufnehmenden (zweiten) Montagevertiefung vorgesehen ist. Dabei wird das Verbindungselement vorzugsweise am Ende des Verdrehvorgangs verrastet und somit unter Ausübung der gewünschten Verspannkraft sicher sowie lösbar fixiert. Vorzugsweise am Rampenende weist die rampenartige Innenkontur eine der Anzahl der Fixierlaschen entsprechende Anzahl von Ausnehmungen auf, in die die Fixierlaschen einrasten. Um in dieser Fixierposition des Verbindungselements die Verspannkraft zusätzlich zu erhöhen, kann der Schaft zusätzlich mit der Folge einer Längenverkürzung verdrillt werden. Hierzu ist dann vorteilhafterweise jedoch nur ein geringer Torsionsweg mit einer halb- oder einfachen Verdrillung erforderlich. Die rampenartige Innenkontur erstreckt sich vorzugsweise für jede Fixierlasche über einen zwischen 90° und 180° liegenden Winkel, wobei die Innenkontur einem entsprechenden Rampenkreissegment entspricht.

In einer alternativen Ausführungsform sind die Fixierlaschen am T-förmig ausgebildeten Einführende zunächst in einem Ausgangszustand zur Anpassung an die Außenabmessung des Schaftes kreisbogenförmig eingebogen. Die eingebogenen Fixierlaschen werden im Montagezustand, d.h. nach dem Einführen des Verbindungselements in die Durchgangsöffnungen, radial nach außen ausgebogen. Um dabei die Ausbiegung der Fixierlaschen am Einführende außerhalb des diesem zugewandten Bauelements oder Gehäuseteils vornehmen zu können, ist die das gegenüberliegende Halteende des Verbindungselements aufnehmende (erste) Montagevertiefung zweistufig ausgebildet. Die stufige Innenkontur ist zweckmäßigerweise durch zwei zueinander winklig, vorzugsweise rechtwinklig, verlaufende Einkerbungen unterschiedlicher Kerbentiefe gebildet.

Bei Lagefixierung des Verbindungselements über dessen Halteende in einer ersten, vergleichsweise tiefen Position ragt das mit den Fixierlaschen versehene Einführende aus der Montagevertiefung heraus und über die Bauelemente- oder Gehäuseanordnung hinaus, so dass in einfacher Weise die Fixierlaschen radial ausgebogen werden können. Im Anschluss an diesen Biegevorgang wird das Verbindungselement zurückgezogen und in einer zweiten Position lagefixiert, die gegenüber der ersten Position axial nach außen verschoben oder versetzt ist. Dabei wird gleichzeitig das Einführende vollständig in die diesem zugeordnete Montagevertiefung hineingezogen.

Anschließend kann durch Verdrillen des Schaftes des Verbindungselements die gewünschte Verspannkraft zum Verspannen der Bauelemente oder Gehäuseteile miteinander erzeugt werden. Dabei wird ein entsprechendes Verdrillwerkzeug am mit den ausgebogenen Fixierlaschen versehenen Einführende angesetzt, wobei infolge der Zentrierwirkung an dem dem Einführende gegenüberliegenden Halteende eine Vergleichmäßigung der Zugkraft auf das Verbindungselement bewirkt wird. Zudem wird vorteilhafterweise aufgrund der vergleichsweise großen miteinander korrespondierenden Anzugsflächen des Zentrierkegels einerseits und des Zentrierkonus am Halteende andererseits eine zur Vermeidung eines Mitdrehens des Halteendes ausreichende Reibkraft erzeugt. Ein beidseitiges Festhalten des Verbindungselements an dessen beiden Schaftenden ist daher nicht erforderlich. Diese Ausführungsform eignet sich besonders zur Verbindung mehrpoliger Leitungsschutzschalter mit einer entsprechenden Mehrzahl von Gehäuse- und Deckelschalen.

In einer anderen zweckmäßigen Ausgestaltung ist das Einführende des Verbindungselements gabelartig ausgestaltet, wobei zwei sich in einem Ausgangszustand in Schaftlängsrichtung erstreckende Fixierlaschen zweckmäßigerweise durch eine entsprechende Ausstanzung am Schaftende gebildet sind. Die Fixierlaschen bilden somit eine direkte, geradlinige Verlängerung des Schaftes ohne seitlichen Überstand. Diese Fixierlaschen werden im Montagezustand radial ausgebogen, wobei die Ausbiegung in oder quer zur Schaftebene erfolgen kann.

Bei dieser Ausführungsform wird das Verbindungselement wiederum nach Herstellung des Formschlusses durch Ausbiegen der Fixierlaschen verdrillt. Dabei ist wiederum aufgrund des Formschlusses im Montagezustand die Anzahl der beim Tordieren des Schaftes herzustellenden Windungen besonders gering, insbesondere lediglich einfach.

Die mit der Erfindung erzielten Vorteile bestehen insbesondere darin, dass durch Ausbildung eines Zentrierkegels in einer ein konisches Halteende eines flachbandartigen Verbindungselements aufnehmenden Montagevertiefung einerseits eine Zentrierung und andererseits eine hohe Reibkraft gewährleistet ist, so dass beim Verspannen von mit entsprechenden Durchgangsöffnungen versehenen Bauelemente eine hohe Spannkraft bei gleichzeitig einfacher Handhabung erzielt wird. Außerdem wird beim Verdrehen des Verbindungselements zum Verspannen der Bauelemente bei gleichzeitiger Selbstzentrierung des Verbindungselements ein besonders geringer Verdreh- oder Verdrillweg erreicht. Dabei ist auch bei mehrpoligen Geräten mit einer entsprechenden Mehrzahl von Gehäuseteilen oder -schalen für jede derartige Verbindungsstelle lediglich ein Verbindungsteil erforderlich.

Das dazu vorgesehene Verbindungselement ist einerseits besonders einfach und andererseits aufgrund des ungeschwächten Material- oder Schaftquerschnitts besonders stabil ausgeführt. Auch ist die Verbindung vor Ort in besonders einfacher Art und Weise herstellbar. Bei Verwendung von verzinktem Stahlband oder nicht rostendem Material ist zudem ein zuverlässiger Korrosionsschutz gegeben. Wesentlicher Vorteil ist, dass bereits vorhandene Niet- oder Schraubenlöcher in den Gehäuseteilen verwendet werden können. Aufgrund des bereits im Montagezustand und vor dem Verdrehen und/oder Verdrillen des Verbindungselements hergestellten Formschlusses sowohl am Halteende als auch am Einführende des Schaftes des Verbindungselementes, ist die zum Aufbringen der erforderlichen Verspannkraft notwendige Längenreduzierung des Verbindungselements und damit die erforderliche Torsionsstrecke besonders gering und insbesondere gegenüber dem genannten Stand der Technik nach DE 83 22 594 U1 erheblich verkürzt.

Nachfolgend werden Ausführungsbeispiele der Erfindung anhand einer Zeichnung näher erläutert. Darin zeigen:
- FIG 1: in perspektivischer Darstellung ein flachbandartiges, I-förmiges Verbindungselement,
- FIG 2: schematisch in perspektivischer und in Längsrichtung aufgeschnittener Darstellung den Verbindungsbereich zweier Bauelemente zur Aufnahme des Verbindungselements nach FIG 1,
- FIG 3: in einer Darstellung gemäß FIG 2 die Verbindungsvorrichtung mit eingesetztem Verbindungselement,
- FIG 4: in Draufsicht (obere Figurenhälfte) und in einer Seitenansicht (untere Figurenhälfte) ein Verbindungselement gemäß FIG 1 mit kreisförmig eingebogenen Fixierlaschen am Einführende,
- FIG 5 bis 8: jeweils in Draufsicht (obere Figurenhälfte) und in einem Längsschnitt (untere Figurenhälfte) das Verbindungselement gemäß FIG 4 in verschiedenen Montagezuständen der Verbindungsvorrichtung, wobei in den Figuren 7 und 8 ein gegenüber den Figuren 5 und 6 um 90° versetzter Längsschnitt dargestellt ist,
- FIG 9: in zwei Ansichten die Verbindungsvorrichtung gemäß FIG 8 bei einem zweipoligen Gerät,
- FIG 10: in perspektivischer Darstellung eine alternative Ausführungsform des Verbindungselements mit gabelartigem Einführende,
- FIG 11: in perspektivischer Darstellung die Verbindungsvorrichtung mit dem Verbindungselement gemäß FIG 10,
- FIG 12: eine modifizierte Ausführungsform des Verbindungselements gemäß FIG 10, und
- FIG 13: eine entsprechende Verbindungsvorrichtung unter Verwendung des Verbindungselements gemäß FIG 12.

Einander entsprechende Teile sind in allen Figuren mit den gleichen Bezugszeichen versehen.

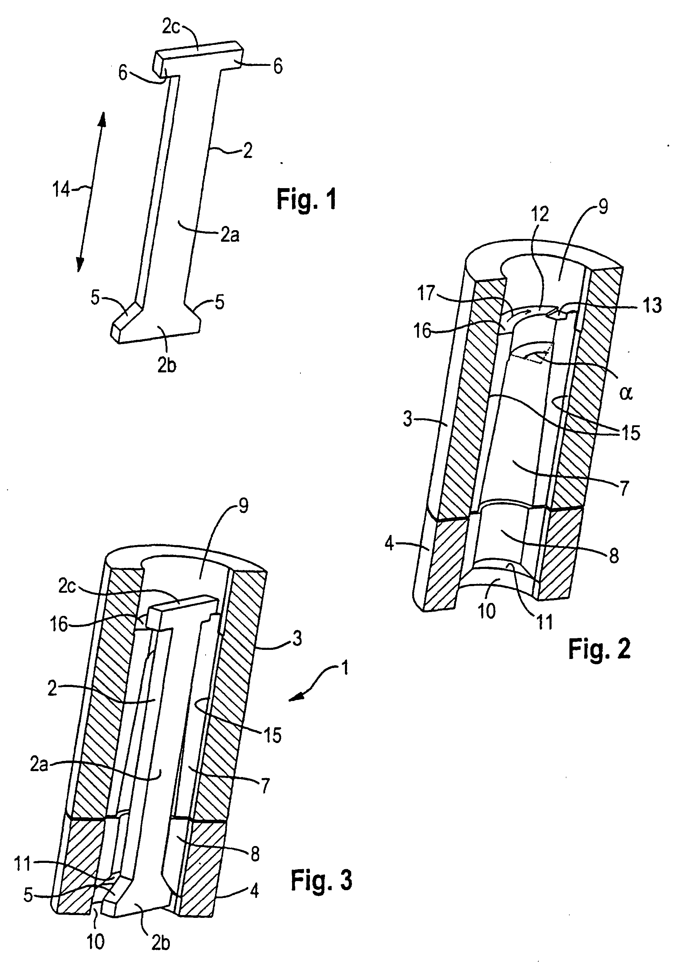

FIG 1 zeigt ein aus einem Flachbandmaterial gestanztes I-förmiges Verbindungselement 2 einer Verbindungsvorrichtung 1 gemäß FIG 3 zum Verbinden einer Gehäuseschale 3 und einer Deckelschale 4, beispielsweise eines Leitungsschutzschalters. Das Verbindungselement 2 weist einen länglichen Schaft 2a auf, dessen Schaftenden 2b und 2c radial nach außen ausgestellt sind. Dabei ist das nachfolgend als Halteende bezeichnete Schaftende 2b konisch ausgebildet, wobei der Konus unter Ausbildung von Anzugsflächen 5 auf den Schaft 2 gerichtet ist. Das gegenüberliegende, nachfolgend als Einführende bezeichnete Schaftende 2c weist zwei radial nach außen gerichtete Fixierlaschen oder -elemente 6 auf.

Wie aus FIG 2 vergleichsweise deutlich ersichtlich ist, sind die Bauelemente oder Gehäuseteile 3,4 mit miteinander fluchtenden Durchgangsöffnungen 7 bzw. 8 versehen, in die jeweils eine Montagevertiefung 9 bzw. 10 mündet. Die im Ausführungsbeispiel der Deckelschale 4 zugeordnete erste Montagevertiefung 10 ist mit einem mit den Anzugsflächen 5 des konischen Halteendes 2b des Verbindungselements 1 korrespondierenden Zentrierkegel 11 versehen, dessen Innendurchmesser sich konisch auf den Innendurchmesser der Durchgangsbohrungen 7,8 verjüngt. Die gegenüberliegende, im Ausführungsbeispiel der Gehäuseschale 3 zugeordnete zweite Montagevertiefung 9 weist in deren Umfangsrichtung verlaufende rampenartige Innenkonturen 12 auf, von denen nur eine sichtbar ist. Diese weisen am Ende des durch diese gebildeten Kreissegments eine Ausnehmung 13 auf.

Die Durchgangsöffnungen 7,8 sind in Schaftlängsrichtung 14 mit diametral gegenüberliegenden Schlitzen 15 zur Führung der Fixierlaschen 6 des Verbindungselements 1 versehen. Über diese Führungsschlitze 15 wird das Verbindungselement 2 mit dessen Einführende 2c eingeführt, bis die Fixierlaschen 6 den jeweiligen Rampenanfang 16 überragen. Durch anschließendes Verdrehen des Verbindungselements 1 in Verdrehrichtung 17 um einen Verdrehwinkel α von etwa 100° bis 180° werden die Gehäuseteile 3,4 miteinander verspannt. Dabei rastet das Verbindungselement 2 durch Einschnappen der entlang der rampenartigen Innenkonturen 12 geführten Fixierlaschen 6 in die entsprechende Ausnehmung 13 am jeweiligen Rampenende ein. Die dabei erzielte Verspannkraft kann durch zusätzliches Verdrillen oder Tordieren des Schaftes 2 erhöht werden, wobei hierzu vorzugsweise ein entsprechendes Verdrillwerkzeug entweder am Halteende 2b oder am Einführende 2c des Verbindungselements 1 angreift.

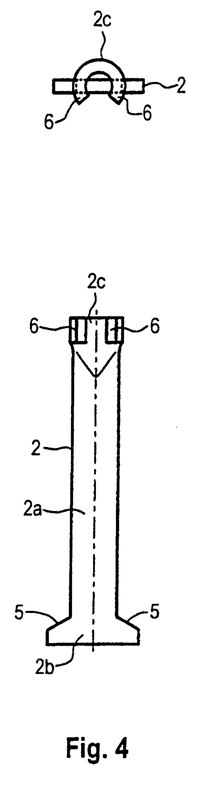

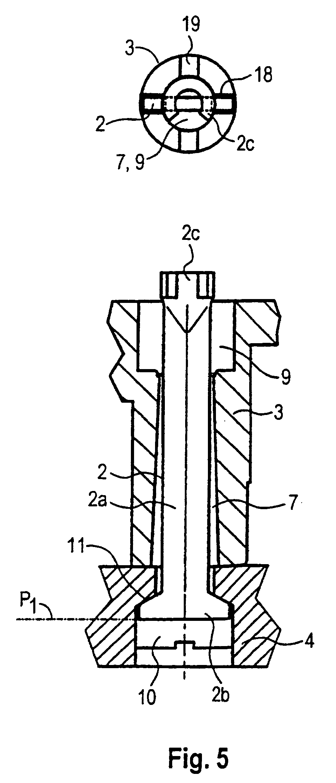

Bei der in den Figuren 4 bis 8 dargestellten Ausführungsform der Verbindungsvorrichtung 1 ist das Verbindungselement 2 ausgehend von dessen Form gemäß FIG 1 am dem Halteende 2b gegenüberliegenden Einführende 2c durch einen Biegevorgang auf die Außenabmessung des Schaftes 2 reduziert, indem die beiden Fixierlaschen 6 kreis- oder kreisbogenförmig eingebogen sind. In diesem Ausgangszustand ist das Verbindungselement 2 durch die miteinander fluchtenden Durchgangsbohrungen 7,8 der Gehäuseteile 3 bzw. 4 durchsteckbar. Diesen Montagezustand zeigt FIG 5 in einem Längsschnitt (untere Figurenhälfte) und in einer Draufsicht auf das Einführende 2c (obere Figurenhälfte). In diesem Montagezustand liegt das Halteende 2b des Verbindungselements 1 innerhalb der Montagevertiefung 10 in einer ersten, vergleichsweise tiefen Position P₁. Dazu ist die Montagevertiefung 10 entsprechend stufig ausgebildet, wobei zur Stufenbildung zwei radial und zueinander rechtwinklig verlaufende Vertiefungen oder Einkerbungen 18,19 vorgesehen sind. Dies ist aus den oberen Figurenhälften der Figuren 5 bis 8 ersichtlich.

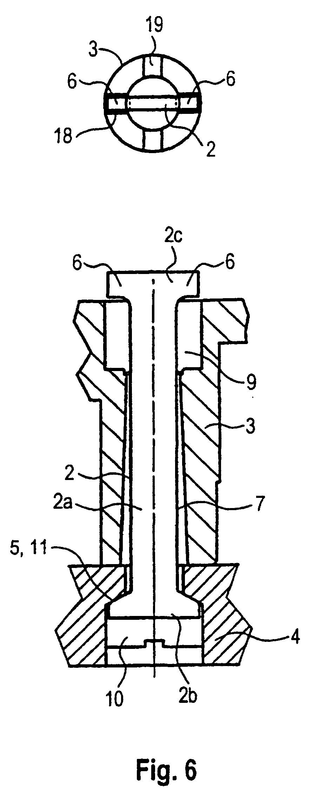

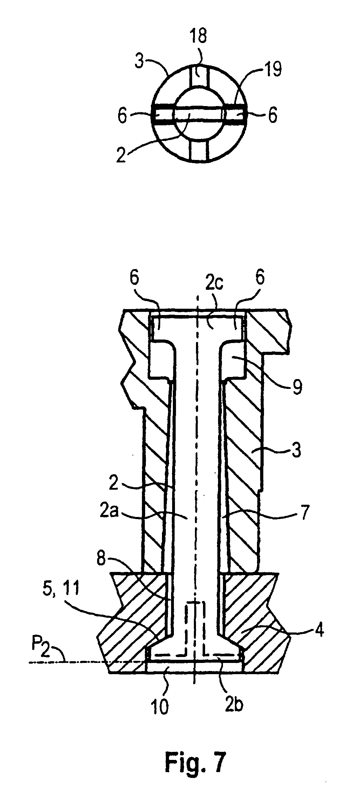

In einem nächsten Montageschritt gemäß FIG 6 werden die beiden Fixierlaschen 6 am Einführende 2c des Verbindungselements 2 radial ausgebogen, wobei der Ausbiegevorgang aufgrund der tiefen Einlagerung des konischen Halteendes 2b außerhalb des Gehäuseteils 3 erfolgen kann. In einem anschließenden Montageschritt gemäß FIG 7 wird das Verbindungselement 2 um ca. 90° gegenüber der Position nach den Figuren 5 und 6 verdreht, wobei das konische Halteende 2b in einer zweiten, axial nach außen versetzten Position P₂ lagefixiert ist. In diesem Montagezustand liegen beide Schaftenden 2b und 2c innerhalb der diesen zugeordneten Montagevertiefungen 9 bzw. 10 vollständig ein. Dabei liegen die Anzugsflächen 5 des konischen Halteendes 2b bereits an den korrespondierenden Konusflächen des Zentrierkegels 11 innerhalb der Montagevertiefung 10 an.

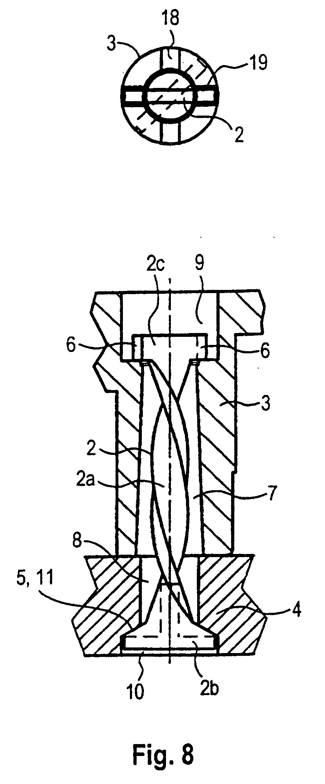

In einem letzten Montageschritt wird der Schaft 2 des Verbindungselements 2 tordiert. Dazu greift zum Verdrillen des Verbindungselements 2 ein entsprechendes (nicht dargestelltes) Werkzeug lediglich am Einführende 2c an, während das gegenüberliegende Halteende 2b aufgrund des Reibschlusses zwischen der Anzugsfläche 5 des konischen Halteendes 2b und der mit dieser korrespondierenden Gegenfläche des Zentrierkegels 11 nicht festgehalten werden muß. Dieser Zustand, bei der die beiden Gehäuseteile 3 und 4 miteinander verspannt sind, ist in FIG 8 dargestellt. Darin ist auch erkennbar, dass lediglich eine einzelne Torsionswindung, d.h. eine 360°-Drehung des Einführendes 2c, zum Verspannen der Gehäuseteile 3,4 erforderlich ist.

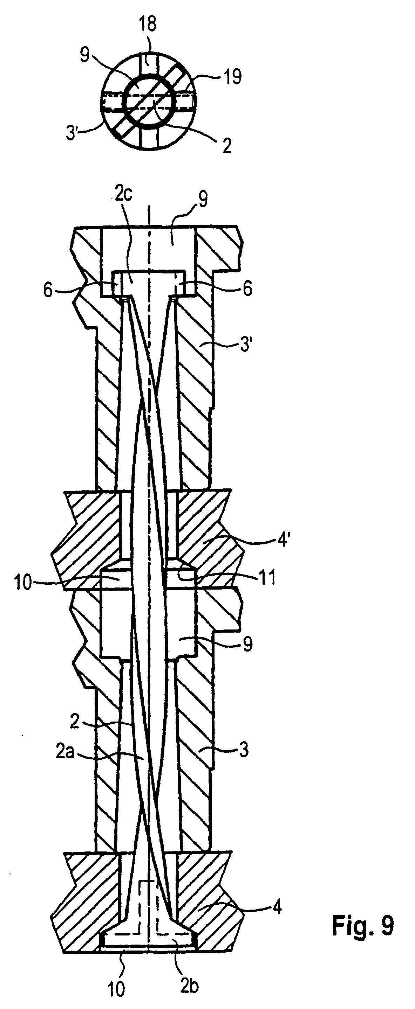

FIG 9 zeigt eine entsprechende Ausführungsform der Verbindung eines zweipoligen Gerätes mit übereinanderliegenden Gehäuseteilen 3,4 und 3',4' in einer Darstellung gemäß FIG 8. Das Verbindungselement 2 ist gegenüber der Ausführungsform gemäß den Figuren 5 bis 8 entsprechend etwa doppelt so lang wie das Verbindungselement 2 für ein einpoliges Gehäuse. Die Verdrillung ist auch hier infolge einer Drehung des Einführendes 2c um 360° lediglich einfach.

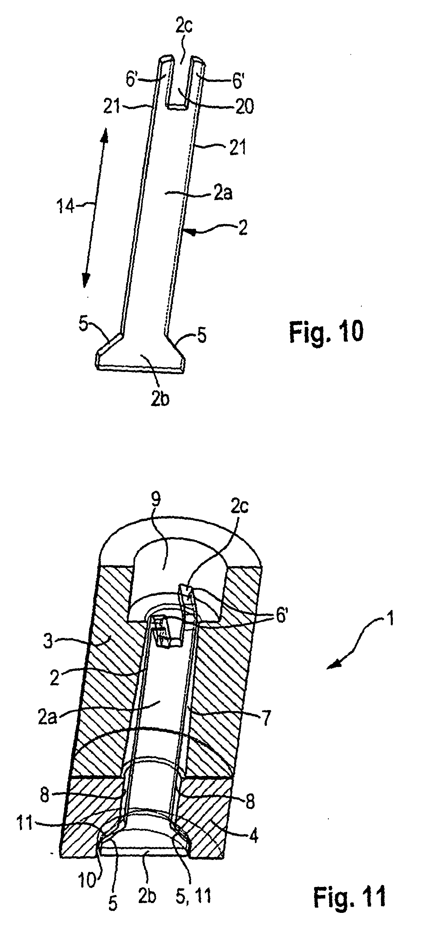

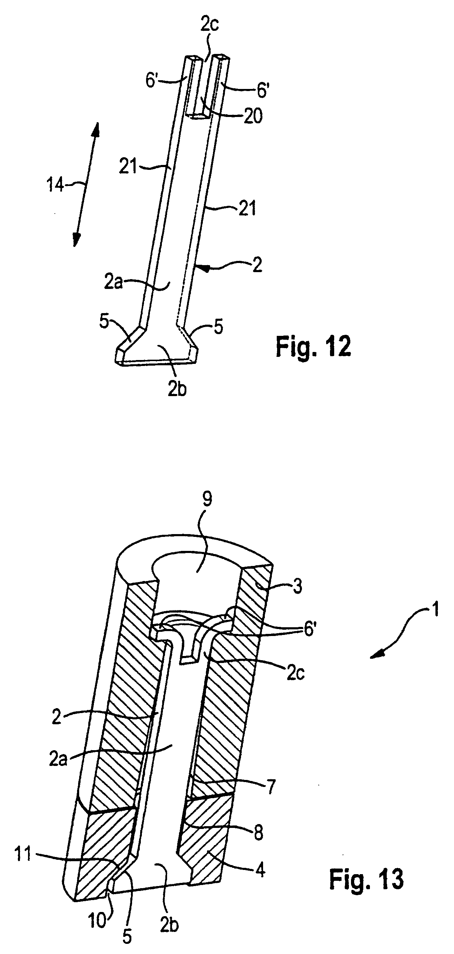

FIG 10 zeigt eine weitere Ausführungsform des Verbindungselements 2, dessen Montagezustand in FIG 11 dargestellt ist. Bei dieser Ausführungsform ist das Verbindungselement 2 an dessen Einführende 2c durch Ausstanzung gabelartig ausgestaltet und mit zwei sich unter Bildung eines rechteckförmigen Schlitzes 20 in Schaftlängsrichtung 14 erstreckenden Fixierlaschen 6' versehen. Diese fingerartig sich in Schaftlängsrichtung 14 parallel zueinander erstreckenden Fixierlaschen 6' bilden praktisch eine direkte Verlängerung des Schaftes 2a, ohne dass die Fixierlaschen 6' seitlich über die Ausdehnung des Schaftes 2a hinausragen. Mit anderen Worten: die Seitenaußenkanten 21 des Schaftes 2a gehen in Richtung des Einführendes 2c in direkter Flucht ohne seitlichen Überstand in die Seitenaußenkanten der Fixierlaschen 6' über.

Nach Einführen des Verbindungselements 2 durch die miteinander fluchtenden Durchgangsbohrungen 7,8 der zu verspannenden Gehäuseteile 3 bzw. 4 liegen die Anzugsflächen 5 des konischen Halteendes 2b wiederum an der korrespondierenden Gegenfläche des Zentrierkegels 11 innerhalb der Montagevertiefung 10 reibschlüssig an. Dadurch ist das Verbindungselement 2 wiederum innerhalb der Durchgangsöffnungen 7,8 zentriert. Durch Umbiegen der beiden Fixierlaschen 6' in entgegengesetzte Richtung und quer zur Ebene des Schaftes 2 wird bereits eine formschlüssige Lagefixierung des Verbindungselements 2 innerhalb der miteinander fluchtenden Durchgangsbohrungen 7,8 erzielt. Durch Verdrillen des Schaftes 2 mittels des wiederum nur einseitig angreifenden Werkzeugs wird die gewünschte Anzugskraft oder Verspannkraft erzielt.

Eine alternative Verbindungsvorrichtung 1 zeigt FIG 13, bei der die beiden Fixierlaschen 6' im Unterschied zu der Ausführungsform gemäß FIG 11 in der Ebene des Schaftes 2 in entgegengesetzter Richtung radial nach außen gebogen sind. Ein dazu vorzugsweise eingesetztes Verbindungselement 2 ist gemäß FIG 12 mit stumpfen Enden der Fixierlaschen 6' ausgeführt, während diese bei dem Verbindungselement 2 gemäß FIG 10 nach außen abgerundet sind. Auch hier entsteht ein Formschluss, wobei die nötige Verspannkraft wiederum durch Verdrillen am gegenüberliegenden Halteende 2b erzeugt wird.

Gegenüber der Variante gemäß FIG 13 hat die Verbindungsvorrichtung 1 gemäß FIG 11 den Vorteil einer größeren Auflagefläche der Fixierlaschen 6'. Außerdem wird eine Verbindung mit besonders hoher Elastizität erreicht. Ferner sind die Verbindungen gemäß den Figuren 11 und 13 lösbar, indem durch weitere Drehung des Halteendes 2b die Fixierlaschen 6' einwärts gebogen werden, bis das Verbindungselement 2 aus den Durchgangsbohrungen 7,8 herausgezogen werden kann.

## Patentansprüche

1. Verbindungsvorrichtung mit einem ersten Bauelement (3) und einem zweiten Bauelement (4) sowie mit einem flachbandartigen Verbindungselement (2), das einen Schaft (2a) mit einem Einführende (2c) und mit einem diesem gegenüberliegenden Halteende (2b) aufweist, wobei der Schaft (2a) in der Verbindung miteinander fluchtende Durchgangsöffnungen (7,8) der Bauelemente (3, 4) durchsetzt, und wobei durch Verdrehen des Verbindungselementes (2) die Bauelemente (3,4) gegeneinander verspannbar sind,
**dadurch gekennzeichnet,**
- **dass** eine mit den Durchgangsöffnungen (7,8) fluchtende erste Montagevertiefung (10) des dem Halteende (2b) zugeordneten Bauelementes (4) einen Zentrierkegel (11) aufweist und das Halteende (2b) unter Bildung einer mit dem Zentrierkegel (11) korrespondierenden Anzugsfläche (5) konisch ausgebildet ist,
- **dass** das Einführende (2c) beim Verdrehen des Verbindungselements (2) in einer zweiten Montagevertiefung (9) des dem Einführende (2c) zugeordneten Bauelementes (3) einliegt, und
- **dass** das Verbindungselement (2) über die gesamte Schaftlänge ungeschwächt, insbesondere ungelocht sowie ungeschlitzt, ausgebildet ist.

2. Verbindungsvorrichtung nach Anspruch 1
**dadurch gekennzeichnet, dass** am Einführende (2c) mindestens eine radial nach außen gerichtete Fixierlasche (6) vorgesehen ist, die beim Verdrehen des Verbindungselements (2) entlang einer rampenartigen Innenkontur (12) einer das Einführende (2c) aufnehmenden zweiten Montagevertiefung (9) geführt ist.

3. Verbindungsvorrichtung nach Anspruch 2,
**dadurch gekennzeichnet, dass** die oder jede Fixierlasche (6) beim Einführen des Verbindungselements (2) in die Durchgangsöffnungen (7,8) in einem in diesen vorgesehenen Längsschlitz (15) geführt ist.

4. Verbindungsvorrichtung nach Anspruch 2 oder 3,
**dadurch gekennzeichnet, dass** die rampenartige Innenkontur (12) eine Ausnehmung (13) aufweist, in die die Fixierlasche (6) einrastet.

5. Verbindungsvorrichtung nach einem Anspruch 2 bis 4,
**dadurch gekennzeichnet, dass** sich die rampenartige Innenkontur (12) über einen Winkel (α) von 90° < α ≤ 180° erstreckt.

6. Verbindungsvorrichtung nach Anspruch 1,
**dadurch gekennzeichnet, dass** das Verbindungselement (2) am Einführende (2c) zwei in einem Ausgangszustand kreisbogenförmig eingebogene Fixierlaschen (6) aufweist, die im Montagezustand radial ausgebogen sind.

7. Verbindungsvorrichtung nach Anspruch 6,
**dadurch gekennzeichnet, dass** die erste Montagevertiefung (10) eine stufige Innenkontur (18,19) aufweist, die infolge eines Verdrehens des Verbindungselements (2) das konische Halteende (2b) innerhalb der ersten Montageöffnung (10) in einer gegenüber einer ersten Position (P₁) axial versetzten zweier Positionen (P₂) hält.

8. Verbindungsvorrichtung nach Anspruch 7,
**dadurch gekennzeichnet, dass** die stufige Innenkontur durch zwei zueinander winklig, vorzugsweise rechtwinklig, verlaufende Einkerbungen (18,19) gebildet ist.

9. Verbindungsvorrichtung nach Anspruch 1,
**dadurch gekennzeichnet, dass** am Einführende (2c) des Verbindungselements (2) zwei sich in einem Ausgangszustand gabelartig in Schaftlängsrichtung (14) erstreckende Fixierlaschen (6') vorgesehen sind, die im Montagezustand radial ausgebogen sind.

10. Verbindungsvorrichtung nach Anspruch 9,
**dadurch gekennzeichnet, dass** die Fixierlaschen (6') im Montagezustand quer zur Schaftebene des Verbindungselements (2) ausgebogen sind.

11. Verbindungsvorrichtung nach Anspruch 9,
**dadurch gekennzeichnet, dass** die Fixierlaschen (6') im Montagezustand in der Schaftebene des Verbindungselements (2) ausgebogen sind.

12. Verbindungsvorrichtung nach einem der Ansprüche 1 bis 11,
**dadurch gekennzeichnet, dass** das Verbindungselement (2) entlang des Schaftes (2a) verdrillbar ist.

## Claims

1. Connecting apparatus with a first component (3) and a second component (4) as well as with a connecting element (2) in the form of a flat strip, said connecting element (2) having a shaft (2a) with an insertion end (2c) and with a holding end (2b) opposite it, the shaft (2a) penetrating mutually aligned through-holes (7, 8) of the components (3, 4) in the connection, and it being possible to brace the components (3, 4) with respect to one another by twisting the connecting element (2),
**characterised in that**
- a first mounting depression (10) of the component (4) associated with the holding end (2b) and mutually aligned with the through-holes (7, 8) has a centring cone (11), and **in that** the holding end (2b) is conical, forming a mating surface (5) which corresponds with the centring cone (11),
- that the insertion end (2c) lies in a second mounting depression (9) of the component (3) associated with the insertion end (2c) when the connecting element (2) is twisted, and
- that the connecting element (2) has no weak point over the entire shaft length, in particular having no holes or slots.

2. Connecting apparatus according to Claim 1, **characterised in that** at least one fixing lug (6) which extends radially outward is provided at the insertion end (2c) and, when the connecting element (2) is twisted, is guided along a ramp-like internal contour (12) on a second-mounting depression (9), which holds the insertion end (2c).

3. Connecting apparatus according to Claim 2, **characterised in that** the or each fixing lug (6) is guided, during insertion of the connecting element (2) into the through-openings (7, 8), in a longitudinal slot (15) provided in them.

4. Connecting apparatus according to Claim 2 or 3, **characterised in that** the ramp-like internal contour (12) has a recess (13) into which the fixing lug (6) latches.

5. Connecting apparatus according to one of Claims 2 to 4, **characterised in that** the ramp-like internal contour (12) extends over an angle (α) of 90° < α ≤ 180°.

6. Connecting apparatus according to Claim 1, **characterised in that**, at the insertion end (2c), the connecting element (2) has two fixing lugs (6) which are bent in in the form of a circular arc in an initial state and are bent out radially in the mounting state.

7. Connecting apparatus according to Claim 6, **characterised in that** the first mounting depression (10) has a stepped internal contour (18, 19) which, as a consequence of the connecting element (2) being twisted, holds the conical holding end (2b) within the first mounting opening (10) in a second position (P₂), which is axially offset with respect to a first position (P₁).

8. Connecting apparatus according to Claim 7, **characterised in that** the stepped internal contour is formed by two notches (18, 19) which run at an angle to one another, preferably at right angles.

9. Connecting apparatus according to Claim 1, **characterised in that** two fixing lugs (6') are provided at the insertion end (2c) of the connecting element (2), extend like a fork, in an initial state, in the shaft longitudinal direction (14), and are bent out radially in the mounting state.

10. Connecting apparatus according to Claim 9, **characterised in that**, in the mounting state, the fixing lugs (6') are bent out transversely with respect to the shaft plain of the connecting element (2).

11. Connecting apparatus according to Claim 9, **characterised in that**, in the mounting state, the fixing lugs (6') are bent out in the shaft plane of the connecting element (2).

12. Connecting apparatus according to one of Claims 1 to 11, **characterised in that** the connecting element (2) can be twisted along the shaft (2a).

## Revendications

1. Dispositif de liaison comportant un premier composant (3) et un deuxième composant (4) ainsi qu'un élément de liaison (2) de type ruban qui comporte une lame (2a) présentant une extrémité d'insertion (2c) et une extrémité de retenue, opposée à ladite extrémité d'insertion, la lame (2a) passant à travers des ouvertures traversantes (7, 8) alignées l'une avec l'autre et ménagées dans les composants (3, 4) et les composants pouvant être serré l'un contre à l'autre en faisant tourner l'élément de liaison (2),
**caractérisé en ce que**
une première cavité de montage (10), alignée avec les ouvertures traversantes (7, 8), du composant (4) associé à l'extrémité de retenue (2b), comporte un cône de centrage (11) et l'élément de retenue (2b) a une forme de cône présentant une surface conique (5) correspondant au cône de centrage (11),
l'extrémité d'insertion (2c) vient se loger dans une deuxième cavité de montage (9) du composant (3) associé à l'extrémité d'insertion (2c) lorsque l'on fait tourner l'élément de liaison (2), et
l'élément de liaison (2) ne présente aucun point faible sur toute la longueur de la lame, en particulier ni des trous ni des fentes.

2. Dispositif de liaison selon la revendication 1, **caractérisé en ce qu'**il est prévu à l'extrémité d'insertion (2c) au moins une patte de fixation (6) qui est dirigée radialement vers l'extérieur et qui est guidée, lorsque l'on fait tourner l'élément de liaison (2), le long d'un contour intérieur (2), en forme de rampe, d'une deuxième cavité de montage (9) recevant l'extrémité d'insertion (2c).

3. Dispositif de liaison selon la revendication 2, **caractérisé en ce que** la patte de fixation ou chaque patte de fixation (6) est guidée, lorsque l'on insère l'élément de liaison (2) dans les ouvertures traversantes (7, 8), dans une fente oblongue (15) ménagée dans ces ouvertures traversantes.

4. Dispositif de liaison selon la revendication 2 ou 3, **caractérisé en ce que** le contour intérieur (12), en forme de rampe, comporte un évidement (13) dans lequel s'encliquète la patte de fixation (6).

5. Dispositif de liaison selon la revendication 2 à 4, **caractérisé en ce que** le contour intérieur (12), en forme de rampe), s'étend sur une plage angulaire (α) telle que 90° < α > 180°.

6. Dispositif de liaison selon la revendication 1, **caractérisé en ce que** l'élément de liaison (2) comporte à l'extrémité d'insertion (2c) deux pattes de fixation (6) qui sont repliées au départ en arc de cercle et qui sont dépliées radialement une fois le montage effectué.

7. Dispositif de liaison selon la revendication 6, **caractérisé en ce que** la première cavité de montage (10) présente un contour intérieur (18, 19) en gradin qui retient l'extrémité de retenue conique (2b) à l'intérieur de la première ouverture de montage (10) dans une deuxième position (P₂) décalée axialement par rapport à une première position (P₁) après avoir fait tourner l'élément de liaison (2).

8. Dispositif de liaison selon la revendication 7, **caractérisé en ce que** le contour intérieur en gradin est formé par deux rainures (18, 19) s'étendant angulairement, avantageusement à angle droit, l'une par rapport à l'autre.

9. Dispositif de liaison selon la revendication 1, **caractérisé en ce qu'**il est prévu à l'extrémité d'insertion (2c) de l'élément de liaison (2) deux pattes de fixation (6') qui s'étendent au départ à la manière d'une fourche dans la direction longitudinale (14) de la lame et qui sont dépliée radialement une fois le montage effectué.

10. Dispositif de liaison selon la revendication 9, **caractérisé en ce que** les pattes de fixation (6') sont dépliées transversalement au plan de la lame de l'élément de liaison (2) une fois le montage effectué.

11. Dispositif de liaison selon la revendication 9, **caractérisé en ce que** les pattes de fixation (6') sont dépliées dans le plan de la lame de l'élément de liaison (2) une fois le montage effectué.

12. Dispositif de liaison selon la revendication 1 à 11, **caractérisé en ce que** l'élément de liaison (2) peut être vrillé le long de la lame (2a).
